# EUROPEAN PATENT APPLICATION

(11) **EP 4 538 995 A2**
(43) Date of publication of application: **16.04.2025**
(21) Application number: 24201220.1
(22) Date of filing: 18.09.2024
(51) Int. Cl.: G06V 20/40, G06V 20/52, G06V 40/16

(54) **METHODS FOR OPERATING A SECURITY SYSTEM**

(30) Priority: 13.10.2023 US 202318486904
(71) Applicant: Honeywell International Inc., Charlotte, NC 28202 (US)
(72) Inventor: ESWARI, Anitha, Charlotte, 28202 (US); HUK, Shirajul, Charlotte, 28202 (US); KANNAN, Prabhu, Charlotte, 28202 (US); MOSES, Satheesh Babu, Charlotte, 28202 (US)
(74) Representative: Haseltine Lake Kempner LLP

(57) **Abstract**

A method for operating a security system of a facility includes receiving a video from a video camera of the security system of the facility. An event of interest occurring in the video is identified via video analytics, and the event of interest is classified into one of plurality of event severity levels. An alert is automatically generated and sent to an operator of the security system when the event of interest is classified as having a first event severity level of the plurality of event severity levels. An alert is automatically generated and sent to a first responder when the event of interest is classified as having a second event severity level of the plurality of event severity levels.

## Description

### TECHNICAL FIELD

The present disclosure relates generally to video security systems and more particularly to identifying events in video security systems.

### BACKGROUND

A number of security systems are in use. Many security systems employ large numbers of video cameras, generating a substantial volume of video streams. It can be difficult for a system operator to be able to watch all of the video streams simultaneously in order to detect all possible events as they are happening. Moreover, when investigating an event that has already occurred, it can be difficult and time consuming to view all of the appropriate video streams in order to find video evidence of exactly what happened during the event. What would be desirable are methods for operating a security system in which events of interest are detected and classified, and various alerts are raised.

### SUMMARY

The present disclosure relates generally to video security systems and more particularly to identifying events in video security systems. An example may be found in a method for operating a security system of a facility. The illustrative method includes receiving a video from a video camera of the security system of the facility. An event of interest occurring in the video is identified via video analytics, and the event of interest is classified into one of plurality of event severity levels. An alert is sent to an operator of the security system when the event of interest is classified as having a first event severity level of the plurality of event severity levels. An alert is sent for a first responder (e.g. police, fire, ambulance) when the event of interest is classified as having a second event severity level of the plurality of event severity levels.

Another example may be found in a method for operating a security system of a facility. The method includes receiving a video from a video camera of the security system of the facility. An event of interest occurring in the video is identified via video analytics. A suspect in the video that is associated with the event of interest is identified. An image of the face of the suspect in the video is identified. The image of the face of the suspect is submitted to a facial recognition engine to identify the identity of the suspect. An access card of the identified suspect is identified, where the access card needs to be presented to access card readers of the security system for the identified suspect to access areas of the facility. An access card trace for the access card of the identified suspect is activated, which tracks subsequent movement of the suspect in the facility, wherein the access card trace is configured to report each time the access card of the identified suspect is presented to an access card reader of the security system along with a location of the corresponding access card reader in the facility.

Another example may be found in a method for operating a security system of a facility. The method includes receiving a video from a video camera of the security system of the facility, identifying an event of interest occurring in the video via video analytics, generating one or more captions describing the event of interest, extracting a first video clip of the event of interest, assembling a report that includes the first video clip of the event of interest and the one or more captions describing the event of interest, and exporting the report.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative security system;
Figures 2A and 2B are flow diagrams that together show an illustrative method for operating a security system of a facility;
Figures 3A and 3B are flow diagrams that together show an illustrative method for operating a security system of a facility;
Figure 4 is a flow diagram showing an illustrative method for operating a security system of a facility;
Figure 5 is a flow diagram showing an illustrative method;
Figure 6 is a flow diagram showing an illustrative method;
Figure 7 is a flow diagram showing an illustrative method; and
Figure 8 is a schematic view of an illustrative incident report that may be generated.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

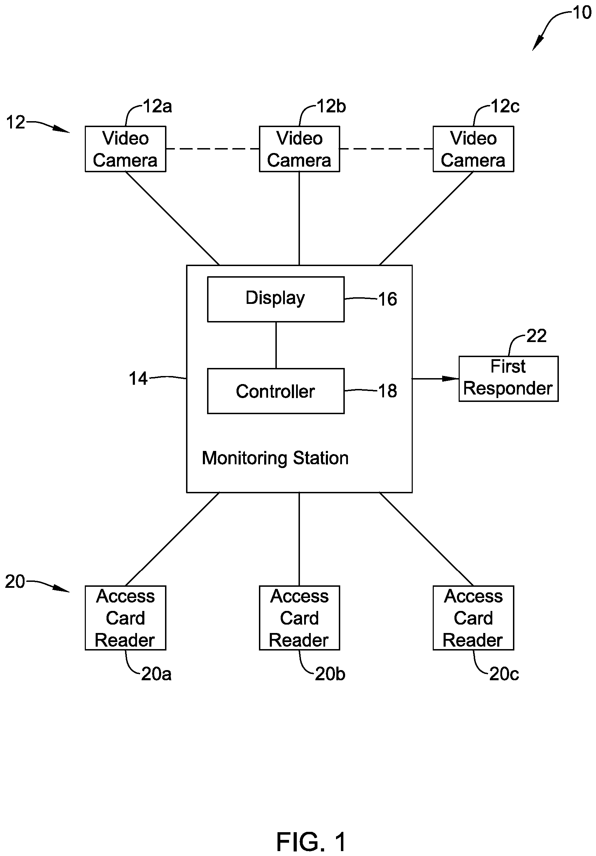

Figure 1 is a schematic block diagram showing an illustrative security system 10 that may be deployed at a facility. The security system 10 includes a number of video cameras 12, individually labeled as 12a, 12b and 12c. While a total of three video cameras 12 are shown, this is merely illustrative as the security system 10 may include any number of video cameras 12 and may include substantially more than three video cameras 12. The video cameras 12 may include fixed Field of View (FOV) cameras. The video cameras 12 may include variable FOV camera, such as but not limited to Pan Tilt Zoom (PTZ) cameras that are configured to change their FOV. The video cameras 12 may include both installed video cameras and portable video cameras. In some instances, the video cameras 12 may include cameras that are mounted into drones.

The video cameras 12 are configured to provide their video streams to a monitoring station 14. In some instances, the monitoring station 14 is installed at the same facility as the video cameras 12. In some instances, the monitoring station 14 may be installed at a remote location from where the video cameras 12 are installed or otherwise located. The video cameras 12 may provide video streams to the monitoring station 14 over a wired or wireless network, for example, using any of a variety of different communication protocols. In some instances, the video cameras 12 may be configured to communicate with each other over a peer-to-peer network that allows a first video camera 12 to tell a second video camera 12 that a scene within the FOV of the first video camera 12 appears to be moving towards or into the FOV of the second video camera 12, thereby alerting the second video camera 12. In some instances, the video cameras 12 may be configured to execute at least some video analytics algorithms to, for example, detect events of interest in the FOV.

In some instances, the monitoring station 14 includes a display 16 that may be used for displaying one or more live video streams and/or one or more recorded video streams and/or video clips. The monitoring station 14 may be operated by a user that watches the video streams and/or video clips displayed on the display 16. The monitoring station 14 may be a computer, such as a desktop computer or a laptop computer. In some instances, at least some of the functionality of the monitoring station 14 may be manifested within one or more cloud-based servers.

In some instances, the user may be able to send alerts based on what the user sees in the displayed videos. In some instances, the monitoring station 14 includes a controller 18 that is configured to control operation of the monitoring station 14. In some instances, the controller 18 may be configured to execute a variety of different video analytics algorithms to detect one or more events of interest in a video stream. In some instances, the video cameras may execute a variety of different video analytics algorithms to detect one or more events of interest in the corresponding video stream.

In some instances, the controller 18 may be configured to create and send out one or more alerts, based upon what the controller 18 (and/or video cameras 12) sees within the video streams (e.g. what events of interests are identified by video analytics algorithms). In some instances, there may be several different severity levels of possible events, and several different severity levels of possible alerts. As an example, some alerts may include sending an alert to the display 16 for viewing by the operator of the monitoring station. Some alerts may include sending an alert to a first responder 22. The first responder 22 may be the police department, fire department and/or ambulance, for example. The first responder 22 may be the security department of the facility in which the security system 10 is installed. In some instances, alerts may be sent to a first responder 22 as well as to the display 16.

In some cases, the controller 18 may be configured to track movement of a particular individual in a facility by tracking when and where the individual presents his/her access card to the access card readers 20, individually labeled as 20a, 20b and 20c. In some cases, the controller 18 may instruct the access card readers 20 to deny access to the particular individual using the particular access card reader 20 to help contain or isolate the particular individual.

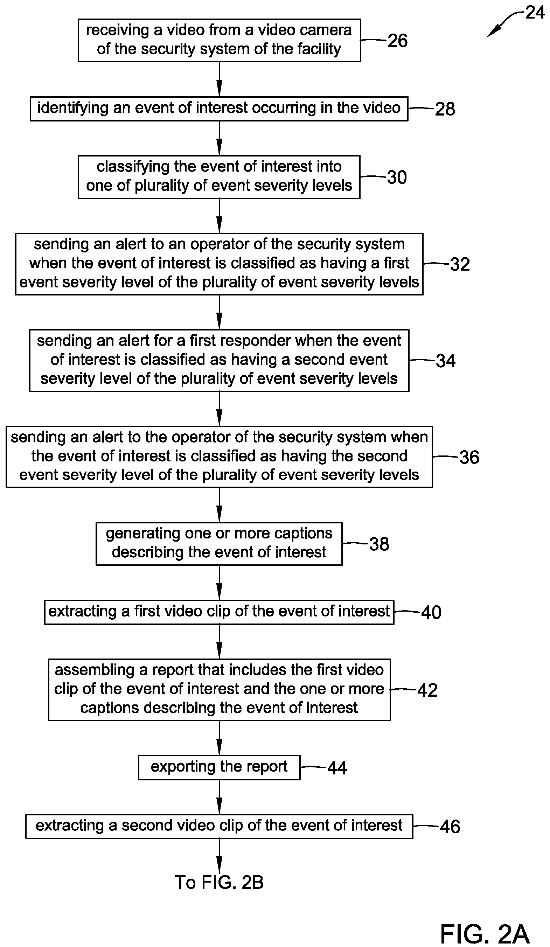

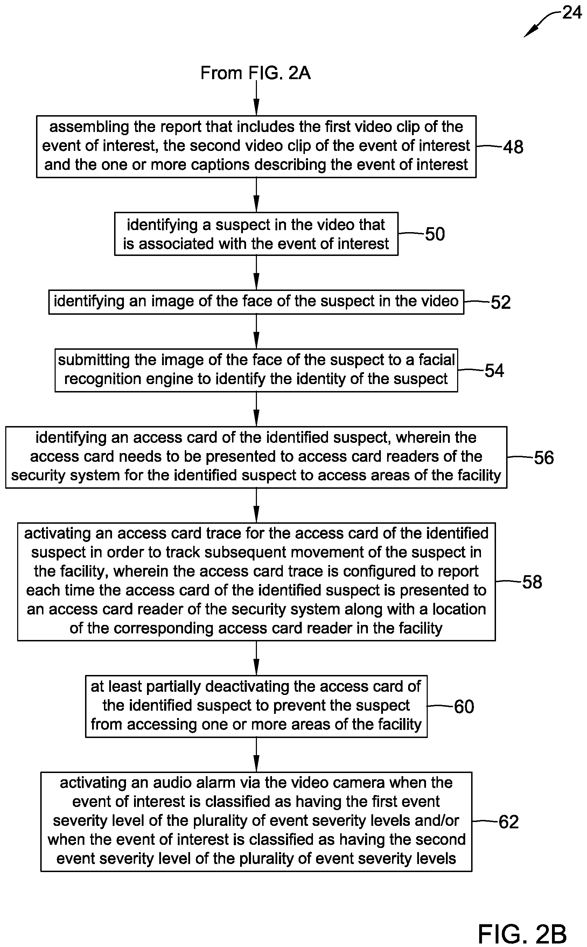

Figures 2A and 2B are flow diagrams that together show an illustrative method 24 for operating a security system (such as the security system 10) of a facility. The illustrative method 24 includes receiving a video from a video camera (such as the video cameras 12) of the security system of the facility, as indicated at block 26. An event of interest occurring in the video is identified, as indicated at block 28. In some cases, the event of interest is identified using a video analytics algorithm running on the monitoring station 14 and/or one or more of the video cameras 12. The event of interest may include a person exhibiting behavior that is of interest. Examples include one or more of a person carrying a weapon, a person having a facial expression that shows fear, a person kicking another person, a person punching another person, a person throwing an object, a person dropping and leaving an object, a person shouting and/or screaming, and a person running. In some instances, identifying the event of interest occurring in the video may include identifying the event of interest using artificial intelligence, wherein the artificial intelligence includes a context-aware event model. In some cases, the event of interest is classified into one of a plurality of event severity levels, as indicated at block 30.

An alert is sent to an operator of the security system when the event of interest is classified as having a first event severity level of the plurality of event severity levels, as indicated at block 32. The first event severity level may be a lower severity level alert, for example. An alert is sent for a first responder when the event of interest is classified as having a second event severity level of the plurality of event severity levels, as indicated at block 34. The second event severity level may be a higher severity level alert, for example. In some instances, the method 24 may include sending an alert to both the operator of the security system and the first responder when the event of interest is classified as having the second event severity level of the plurality of event severity levels, as indicated at block 36.

In some instances, the method 24 may include generating one or more captions describing the event of interest, as indicated at block 38. In some instances, the one or more captions may include natural language captions describing the event of interest occurring in the video. The video may include a video track and a sound track, and the one or more captions may include a caption describing the event of interest in the video track and/or a caption describing the event of interest in the sound track. In some instances, generating one or more captions describing the event of interest may include generating the one or more captions using artificial intelligence, wherein the artificial intelligence includes a context-aware video captioning model that generates natural language captions of the event of interest. In some cases, the context aware video caption generation model may be running on the monitoring station 14 and/or one or more of the video cameras 12.

A first video clip capturing the event of interest may be extracted, as indicated at block 40. A report may be assembled that includes the first video clip of the event of interest and the one or more captions describing the event of interest, as indicated at block 42. In some cases, the report may be generated by the monitoring station 14 and/or one or more of the video cameras 12. The report may be exported, as indicate at block 44.

Continuing with Figure 2B, the method 24 may include assembling the report that includes the first video clip of the event of interest, a second video clip of the event of interest and the one or more captions describing the event of interest, as indicated at block 48. In some instances, the first video clip may be captured by a first video camera and the second video clip may be captured by a second video camera. Sometimes, the first video camera and the second video camera are in communication via a peer-to-peer network.

In some instances, the method 24 may include identifying a suspect in the video that is associated with the event of interest, as indicated at block 50. An image of the face of the suspect in the video may be identified in the video (e.g. in a video frame), as indicated at block 52. The image of the face of the suspect may be submitted to a facial recognition engine to identify the identity of the suspect, as indicated at block 54. An access card of the identified suspect may then be identified, wherein the access card needs to be presented to access card readers 20 of the security system 10 for the identified suspect to access areas of the facility, as indicated at block 56. An access card trace may be activated in the monitoring station 14 for the access card of the identified suspect in order to track subsequent movement of the suspect in the facility, wherein the access card trace is configured to report each time the access card of the identified suspect is presented to an access card reader 20 of the security system 10 along with a location of the corresponding access card reader in the facility, as indicated at block 58. In some instances, the method 24 may include at least partially deactivating the access card of the identified suspect to prevent the suspect from accessing one or more areas of the facility, as indicated at block 60. In some instances, the method 24 may include activating an audio alarm of a video camera 12 when the event of interest is classified as having the first event severity level of the plurality of event severity levels and/or when the event of interest is classified as having the second event severity level of the plurality of event severity levels, as indicated at block 62.

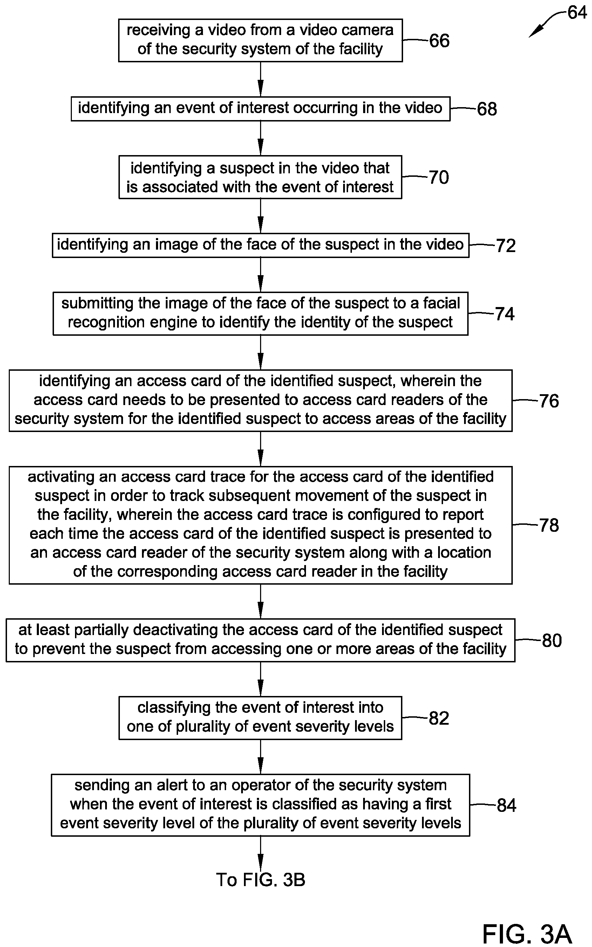

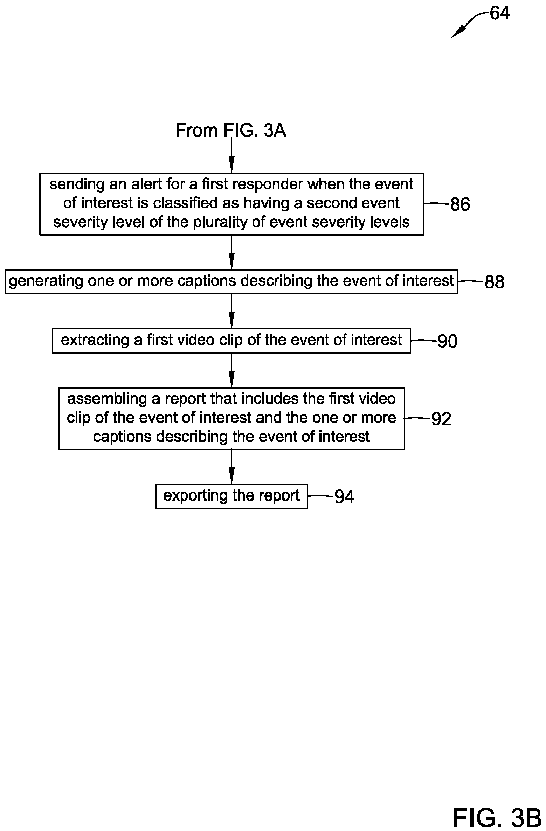

Figures 3A and 3B are flow diagrams that together show an illustrative method 64 for operating a security system (such as the security system 10) of a facility. The method 64 includes receiving a video from a video camera (such as the video cameras 12) of the security system of the facility, as indicated at block 66. An event of interest occurring in the video is identified via video analytics, as indicated at block 68. A suspect in the video that is associated with the event of interest is identified, as indicated at block 70. An image of the face of the suspect in the video is identified, as indicated at block 72. The image of the face of the suspect is submitted to a facial recognition engine to identify the identity of the suspect, as indicated at block 74. An access card of the identified suspect is identified, wherein the access card needs to be presented to access card readers of the security system for the identified suspect to access areas of the facility, as indicated at block 76. An access card trace for the access card of the identified suspect is activated in order to track subsequent movement of the suspect in the facility, wherein the access card trace is configured to report each time the access card of the identified suspect is presented to an access card reader of the security system along with a location of the corresponding access card reader in the facility, as indicated at block 78.

In some instances, the method 64 may include at least partially deactivating the access card of the identified suspect to prevent the suspect from accessing one or more areas of the facility, as indicated at block 80. In some instances, the method 64 may include classifying the event of interest into one of plurality of event severity levels, as indicated at block 82. An alert may be sent to an operator of the security system when the event of interest is classified as having a first event severity level (e.g. lower severity level) of the plurality of event severity levels, as indicated at block 84.

Continuing on Figure 3B, the method 64 may include sending an alert for a first responder when the event of interest is classified as having a second event severity level (e.g. higher severity level) of the plurality of event severity levels, as indicated at block 86. In some instances, the method 64 may include generating one or more captions describing the event of interest, as indicated at block 88. In some cases, the one or more captions are generated by a context-aware video captioning model that generates natural language captions of the event of interest. A first video clip of the event of interest may be extracted, as indicated at block 90. A report may be assembled that includes the first video clip of the event of interest and the one or more captions describing the event of interest, as indicated at block 92. The report may be exported, as indicated at block 94.

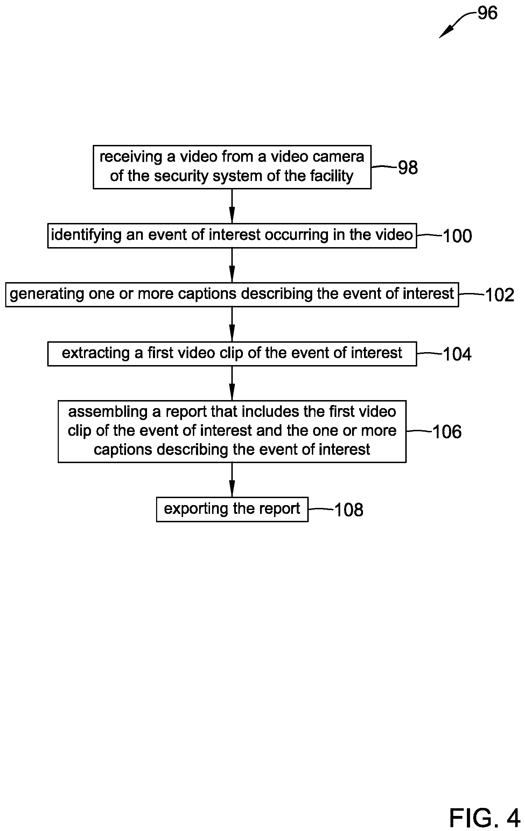

Figure 4 is a flow diagram showing an illustrative method 96 for operating a security system (such as the security system 10) of a facility. The method 96 includes receiving a video from a video camera (such as the video cameras 12) of the security system of the facility, as indicated at block 98. An event of interest occurring in the video is identified (e.g. using video analytics), as indicated at block 100. One or more captions describing the event of interest are generated, as indicated at block 102. In some instances, the one or more captions may include natural language captions describing the event of interest occurring in the video. In some cases, the one or more captions are generated by a context-aware video captioning model that generates natural language captions of the event of interest. In some instances, the video may include a video track and a sound track. The one or more captions may include a caption describing the event of interest in the video track and/or a caption describing the event of interest in the sound track. A first video clip of the event of interest is extracted, as indicated at block 104. A report is assembled that includes the first video clip of the event of interest and the one or more captions describing the event of interest, as indicated at block 106. In some cases, an audio clip of the event of interest is extracted and included in the report. The report is exported, as indicated at block 108.

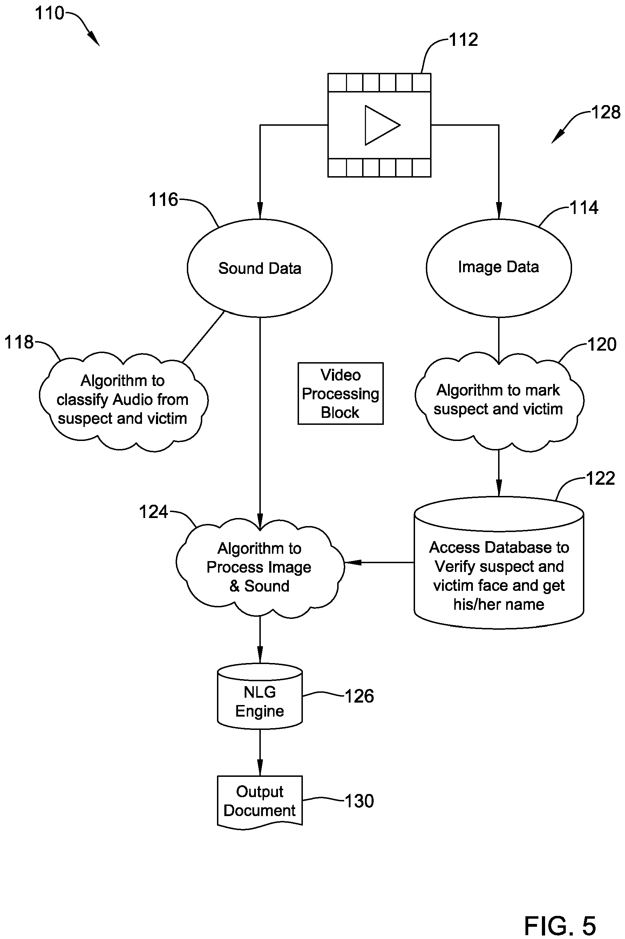

Figure 5 is a flow diagram showing an illustrative method 110 of processing video data 112. The video data 112 may include both video and audio tracks, and each may be processed separately. In Figure 5, the video data 112 is split into image data 114 and sound data 116. The sound data 116 may be processed using a sound algorithm 118 in order to identify an invent of interest and to classify audio from a possible suspect and/or a possible victim. The image data 114 may be processed using a video algorithm 120 in order to identify an event of interest and determine who is the suspect and who is the victim. The video algorithm 120 outputs a face of the possible suspect and a face of the possible victim to a database 122. The database 122 outputs time-stamped image data to an algorithm 124. The sound data is also provided as an input to the algorithm 124. The algorithm 124 processes the images and sounds and outputs to an NLG (Natural Language Generator) Engine 126. In some instances, everything between the video data 112 and the NLG Engine 126 may be considered as representing a video processing block 128. The NLG Engine 126 outputs a report 130. The report 130 may include one or video clips of the event of interest and one or more natural language captions describing what is occurring in the video clips. Since the reports 130 may be automatically generated by the system, an operator may have an easily accessible repository of forensic evidence for the various events of interest. Moreover, the operator may be alerted by the system when an event of interest is detected within the FOV of one of the many cameras, thereby focusing the attention of the operator on the more important happenings. In some cases, for events of interest that are more severe, the system may automatically alert a first responder in order to improve response time to the event of interest.

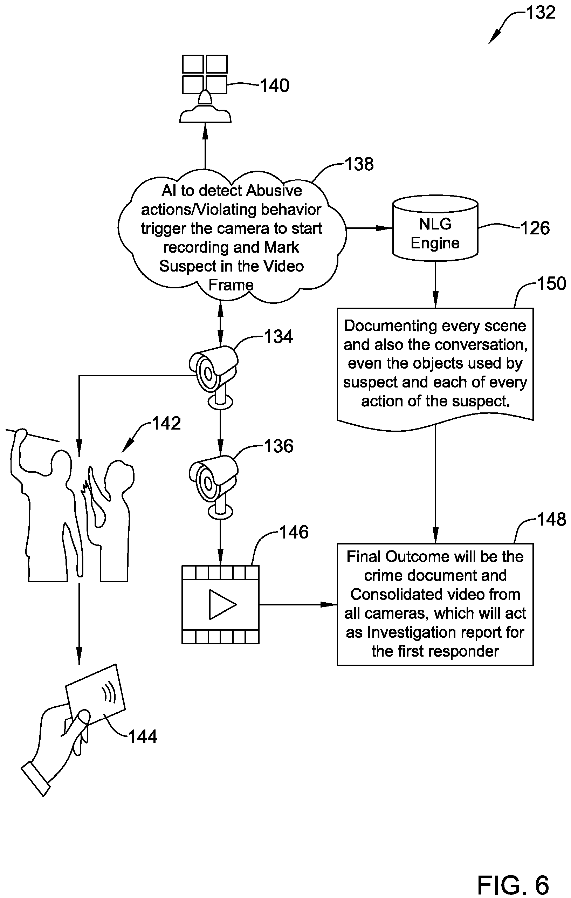

Figure 6 is a flow diagram showing an illustrative method 132 of detecting events of interest. A camera 134 may detect a possible situation (e.g. event of interest) by running video analytics on the video stream captured by the camera 134. Once a possible situation has been detected, the camera 134 may inform a neighboring peer camera 136 to start video recording. The camera 134 also may utilizes AI (Artificial Intelligence) 138 to detect abusive or dangerous situations in its FOV. In some instances, the AI 138 may send an alert to a first responder 140. The camera 134 may zoom in to obtain more information, such as identifying the abusive behavior and/or the identity of the suspect and/or victim, as shown at 142. When so provided, an access card 144 of the suspect may be marked as a trace card, so that the movements of the suspect with the access card 144 may be tracked and/or limited. In some instances, the neighboring peer camera 136 may form a consolidated video clip 146 that includes the evidence recorded by each of the cameras (including the camera 134 and the neighboring peer camera 136). The consolidated video clip 146 may become part of an output 148. In some instances, the outputs from the NLG Engine 126 are documented, as indicated at block 150, and then included as part of the output 148.

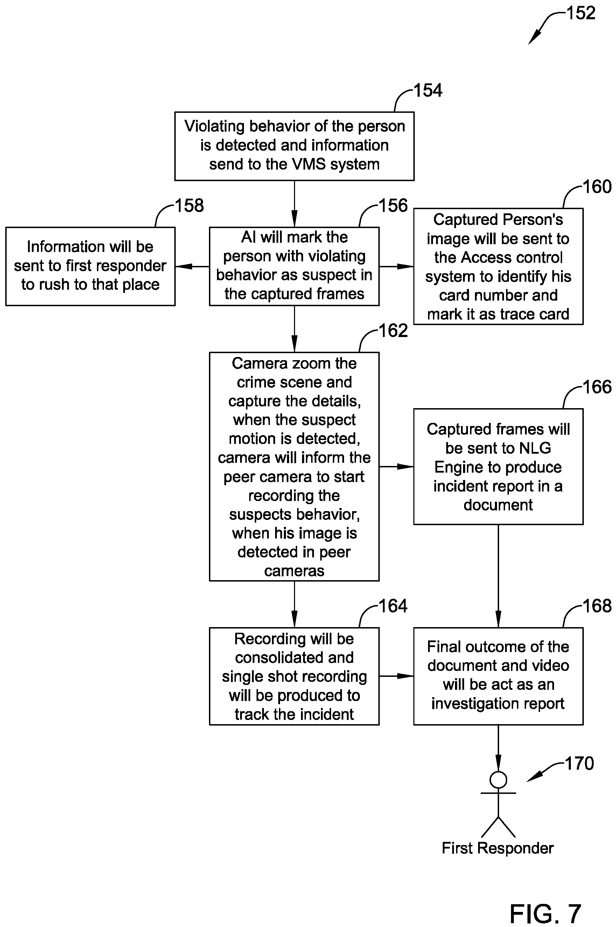

Figure 7 is a flow diagram showing an illustrative method 152 of processing data once violating behavior has been detected. Violating behavior is detected and reported to the Video Management System (VMS) system as indicated at block 154. AI will be used to determine the suspect committing the violating behavior, as indicated at block 156. The suspect's identity may be provided to a first responder, as indicated at block 158. The suspect's identify may be sent to the access control system, as indicated at block 160. Once AI identifies the suspect, the cameras are instructed to zoom in to collect more data, as indicated at block 162. Video captured by the cameras will be consolidated, as indicated at block 164. The additional data captured by the cameras after zooming in is also provided to an NLG engine, as indicated at block 166. The video from block 164 and the incident report generated by the NLG engine at block 166 may be combined into an investigation report, as indicated at block 168. In some instances, the investigation report may be provided to a first responder 170.

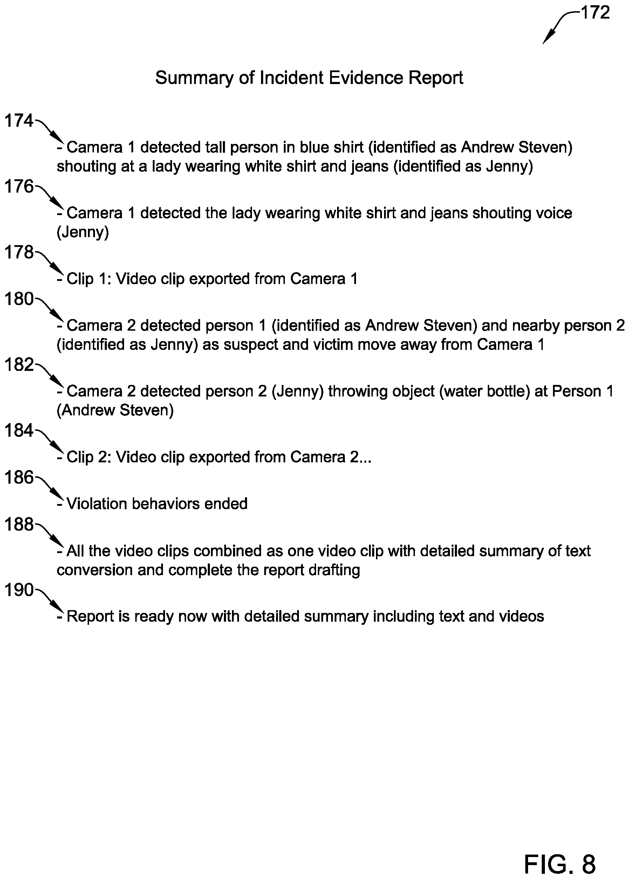

Figure 8 is a schematic example of an illustrative report 172 that may be outputted (such as the investigation report referenced at block 168 of Figure 7). At 174, camera 1 has identified a tall man wearing a blue shirt with a knife in his hand via one or more video analytics algorithms. A context-aware video captioning engine generates a natural language caption of the event of interest. The suspect is shouting at a woman wearing a white top and blue jeans. The suspect is identified as being Andrew Steven while the victim is identified as Jenny. A minute later, camera 1 detects Jenny screaming (via the video and/or audio tracks), as indicated at 176. Subsequently, the suspect and victim move away from camera 1 toward camera 2, and are eventually detected by camera 2, as indicated at 180. Video clips from camera 1 are consolidated and exported from camera 1, as indicated at 178. Camera 2 detects the suspect as attempting to stab the victim while the victim throws a water bottle at the suspect, as indicated at 182. The context-aware video captioning engine generates additional natural language caption of the event of interest. The video clip from camera 2 are exported from camera 2, as indicated at 184. The behavior has stopped, as indicated at 186. Perhaps the suspect has dropped the knife, or has run away as a result of the victim throwing the water bottle at the suspect. All of the recorded video clips and the natural language captions are consolidated and exported, as indicated at 188. The report is complete, as indicated at 190.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for operating a security system of a facility, the method comprising:
receiving a video from a video camera of the security system of the facility;
identifying an event of interest occurring in the video via video analytics;
classifying the event of interest into one of plurality of event severity levels;
sending an alert to an operator of the security system when the event of interest is classified as having a first event severity level of the plurality of event severity levels; and
sending an alert for a first responder when the event of interest is classified as having a second event severity level of the plurality of event severity levels.

2. The method of claim 1, comprising:
sending an alert to the operator of the security system when the event of interest is classified as having the second event severity level of the plurality of event severity levels.

3. The method of claim 1, wherein the event of interest occurring in the video comprises a person exhibiting behavior that is of interest including one or more of:
a person carrying a weapon;
a person having a facial expression that shows fear;
a person kicking another person;
a person punching another person;
a person throwing an object;
a person dropping and leaving an object;
a person shouting and/or screaming; and
a person running.

4. The method of claim 1, wherein identifying the event of interest occurring in the video includes identifying the event of interest using artificial intelligence, wherein the artificial intelligence includes a context-aware event model.

5. The method of claim 1, comprising:
generating one or more captions describing the event of interest;
extracting a first video clip of the event of interest;
assembling a report that includes the first video clip of the event of interest and the one or more captions describing the event of interest; and
exporting the report.

6. The method of claim 5, wherein the one or more captions comprise natural language captions describing the event of interest occurring in the video.

7. The method of claim 6, wherein the video includes a video track and a sound track, wherein the one or more captions include:
a caption describing the event of interest in the video track; and
a caption describing the event of interest in the sound track.

8. The method of claim 5, wherein generating one or more captions describing the event of interest includes generating the one or more captions using artificial intelligence, wherein the artificial intelligence includes a context-aware video captioning model that generates natural language captions of the event of interest.

9. The method of claim 5, comprising:
extracting a second video clip of the event of interest; and
assembling the report that includes the first video clip of the event of interest, the second video clip of the event of interest and the one or more captions describing the event of interest.

10. The method of claim 9, wherein the first video clip is captured by a first video camera and the second video clip is captured by a second video camera, wherein the first video camera and the second video camera are in communication via a peer-to-peer network.

11. The method of claim 1, comprising:
identifying a suspect in the video that is associated with the event of interest;
identifying an image of the face of the suspect in the video;
submitting the image of the face of the suspect to a facial recognition engine to identify the identity of the suspect;
identifying an access card of the identified suspect, wherein the access card needs to be presented to access card readers of the security system for the identified suspect to access areas of the facility; and
activating an access card trace for the access card of the identified suspect in order to track subsequent movement of the suspect in the facility, wherein the access card trace is configured to report each time the access card of the identified suspect is presented to an access card reader of the security system along with a location of the corresponding access card reader in the facility.

12. The method of claim 11, comprising at least partially deactivating the access card of the identified suspect to prevent the suspect from accessing one or more areas of the facility.

13. The method of claim 1, comprising activating an audio alarm via the video camera when the event of interest is classified as having the first event severity level of the plurality of event severity levels and/or when the event of interest is classified as having the second event severity level of the plurality of event severity levels.

14. A security system comprising:
a video camera for capturing a video;
a controller operatively coupled to the video camera, the controller configured to:
identify an event of interest occurring in the video via video analytics;
classify the event of interest into one of plurality of event severity levels; send an alert to an operator of the security system when the event of interest is classified as having a first event severity level of the plurality of event severity levels; and
send an alert for a first responder when the event of interest is classified as having a second event severity level of the plurality of event severity levels.

15. The security system of claim 1, wherein the controller is configured to send an alert to the operator of the security system when the event of interest is classified as having the second event severity level of the plurality of event severity levels.
